# EUROPEAN PATENT APPLICATION

(11) **EP 4 811 435 A1**
(43) Date of publication of application: **23.09.2026**
(21) Application number: 25824494.6
(22) Date of filing: 17.03.2025
(51) Int. Cl.: H01M 4/13

(54) **ELECTRODE SHEET, BATTERY CELL AND BATTERY**

(30) Priority: 27.06.2024 CN 202421499449 U
(71) Applicant: Zhuhai CosMX Battery Co., Ltd., Zhuhai, Guangdong 519180 (CN)
(72) Inventor: ZHANG, Rongxi, Zhuhai, Guangdong 519180 (CN); WANG, Yuefeng, Zhuhai, Guangdong 519180 (CN); FU, Xichao, Zhuhai, Guangdong 519180 (CN); XIN, Hanshuai, Zhuhai, Guangdong 519180 (CN)
(74) Representative: Vossius & Partner Patentanwälte Rechtsanwälte mbB
(86) International application number: PCT/CN2025/082877
(87) International publication number: WO 2026/001099

(57) **Abstract**

The present application provides an electrode sheet, a cell and a battery, relating to the technical field of batteries. The electrode sheet includes a current collector, and an active layer and an insulation layer located on the current collector, where the active layer includes a first main body region and an edge region connected to each other, and the insulation layer includes a second main body region and a first side region close to the active layer, a thickness of the first side region of the insulation layer being less than a thickness of the second main body region of the insulation layer. A ratio of a minimum thickness of the edge region to a thickness of the first main body region ranges from 0.95 to 1.05. In the electrode sheet provided in the embodiments of the present application, the overall thickness difference of the active layer can be effectively reduced, making the thickness of the active layer on the current collector more uniform. In this way, after the electrode sheet is wound or stacked, the accumulation of thickness difference can be effectively reduced, and the thickness difference between the main body part in the middle and the edge part of the cell can be effectively reduced. The content of the active layer can be effectively increased, thereby effectively increasing the energy density of the cell.

## Description

### TECHNICAL FIELD

The present application relates to the technical field of batteries, and in particular to an electrode sheet, a cell and a battery.

### BACKGROUND

A battery is a component that converts chemical energy into electrical energy, and is widely used in daily life and work. For example, lithium-ion batteries are commonly used in various electronic devices such as mobile phones, cameras, laptops and tablets to supply power to these electronic devices, thereby playing an important role in people's daily life and work.

A lithium-ion battery includes an electrode sheet. The electrode sheet includes a current collector, and an active layer and an insulation layer which are coated onto the current collector. Typically, during the process of coating the current collector with the active layer, the active layer has a thinned region at the part close to an edge. The thinned region is typically thin, and the difference between the thickness of the thinned region and the thickness of a main body region of the active layer is typically several microns. In this way, after multiple windings or stackings, the thickness difference may accumulate, so that the difference between the thickness of the edge part and the thickness of the main body region of the electrode sheet may reach several millimeters, which greatly reduces the energy density of a cell.

### SUMMARY

The present application provides an electrode sheet, a cell and a battery, which can effectively increase the energy density at an edge part of the cell.

In one aspect, the present application provides an electrode sheet, including a current collector, and an active layer and an insulation layer located on the current collector, where
the active layer includes a first main body region and an edge region connected to each other, the insulation layer is arranged adjacent to the edge region of the active layer, and the insulation layer includes a second main body region and a first side region close to the active layer, a thickness of the first side region of the insulation layer being less than a thickness of the second main body region of the insulation layer; and
a ratio of a minimum thickness of the edge region to a thickness of the first main body region ranges from 0.95 to 1.05.

In the present application, the ratio of the minimum thickness of the edge region of the active layer to the thickness of the first main body region ranges from 0.95 to 1.05, so that the overall thickness difference of the active layer can be effectively reduced to make the thickness of the active layer on the current collector more uniform, which can effectively reduce the thickness difference between the main body part in the middle and the edge part of the electrode sheet to make the overall thickness of the electrode sheet more uniform. After the electrode sheet is wound or stacked, the accumulation of the thickness difference can be effectively reduced, and the thickness difference between the main body part in the middle and the edge part of the cell can be effectively reduced. The content of the active layer can be effectively increased, thereby effectively increasing the energy density of the cell.

In a possible implementation, a thickness of the edge region gradually decreases from an end of the edge region close to the first main body region to an end of the edge region away from the first main body region.

In a possible implementation, a ratio of a thickness of a highest point of the second main body region to a thickness of a highest point of the first main body region ranges from 1 : 1 to 1 : 4.

In a possible implementation, the current collector includes an electrode sheet region and a tab region connected to each other; and
the active layer is located on the electrode sheet region, and the second main body region of the insulation layer is located on the tab region.

In a possible implementation, a distance between the highest point of the second main body region and the edge region is a, and a distance between the highest point of the second main body region and an end of the insulation layer away from the edge region is b, a value of a being less than or equal to a value of b;
and/or 0.2 mm ≤ a ≤ 1.5 mm;
and/or 1.5 mm ≤ b ≤ 3 mm.

In a possible implementation, a ratio of the distance a between the highest point of the second main body region and the edge region to a length of the tab region ranges from 0.1 to 0.3.

In a possible implementation, a ratio of a thickness of a highest point of the second main body region to the thickness of the end of the edge region close to the insulation layer ranges from 1 : 1 to 3 : 1.

In a possible implementation, a gap is formed between at least part of the insulation layer and the edge region, and a ratio of a width of the gap to a width of the insulation layer is less than 0.3;
and/or the width of the gap is less than or equal to 0.5 mm.

In a possible implementation, the gap is located in the electrode sheet region or located in the tab region.

In a second aspect, the present application provides a cell, including a first electrode sheet, a second electrode sheet and a separator, where the first electrode sheet is an electrode sheet as described in any one of the above implementations.

In a possible implementation, a highest point of an insulation layer of the first electrode sheet extends beyond an edge of the second electrode sheet in a direction from an electrode sheet region toward a tab region of the first electrode sheet.

In a third aspect, the present application provides a battery including the cell described above.

### BRIEF DESCRIPTION OF THE DRAWINGS

In order to illustrate the technical solutions in the embodiments of the present application or in the prior art more clearly, the accompanying drawings required for describing the embodiments or the prior art will be briefly introduced below. Obviously, the accompanying drawings in the following description are some embodiments of the present application. Those of ordinary skill in the art may derive other drawings from these drawings without involving any inventive effort.
FIG. 1 is a schematic structural diagram of an electrode sheet according to an embodiment of the present application.
FIG. 2 is a cross-sectional view of the electrode sheet according to an embodiment of the present application.
FIG. 3 is a physical picture in cross-sectional view of the electrode sheet according to an embodiment of the present application.
FIG. 4 is a schematic structural diagram of a current collector according to an embodiment of the present application.

Reference signs:
100. Electrode sheet;
110. Current collector; 111. Electrode sheet region; 112. Tab region;
120. Active layer; 121. First main body region; 122. Edge region;
130. Insulation layer; 131. Second main body region; 132. First side region;
140. Gap.

### DETAILED DESCRIPTION OF EMBODIMENTS

In order to make the objects, technical solutions and advantages of embodiments of the present application clearer, the technical solutions in the embodiments of the present application will be described clearly and completely below with reference to the accompanying drawings in the embodiments of the present application. Obviously, the embodiments described are some of, rather than all of, the embodiments of the present application. All other embodiments obtained by a person of ordinary skill in the art based on the embodiments of the present application without creative efforts shall fall within the scope of protection of the present application.

As described in the background, a lithium-ion battery includes an electrode sheet, and the electrode sheet includes a current collector and an active layer coated onto the current collector. Typically, during the process of coating the current collector with the active layer, the active layer has a thinned region at a part close to an edge. The thinned region is typically thin, and the difference between the thickness of the thinned region and the thickness of a main body region of the active layer is typically several microns. In this way, after multiple windings or stackings, the thickness difference may accumulate, so that the difference between the thickness of the edge part and the thickness of the main body region of the electrode sheet may reach several millimeters. In this way, during hot-pressing formation of the electrode sheet, there may be a recess on a side of a cell connected to a tab region, so that the edge of the electrode sheet is less pressed, the adhesion at the edge of the electrode sheet is reduced, and the energy density at the edge part of the cell can also be reduced.

In order to solve the above problems, an embodiment of the present application provides an electrode sheet, in which a ratio of a minimum thickness of an edge region of the active layer to a thickness of a first main body region ranges from 0.95 to 1.05. In this way, the overall thickness difference of the active layer can be effectively reduced to make the thickness of the active layer on the current collector more uniform, which can effectively reduce the thickness difference between the main body part in the middle and the edge part of the electrode sheet to make the overall thickness of the electrode sheet more uniform. After the electrode sheet is wound or stacked, the accumulation of the thickness difference can be effectively reduced, and the thickness difference between the main body part in the middle and the edge part of the cell can be effectively reduced. The content of the active layer can be effectively increased, thereby effectively increasing the energy density of the cell.

The electrode sheet provided in the embodiment of the present application will be described in detail below with reference to the accompanying drawings.

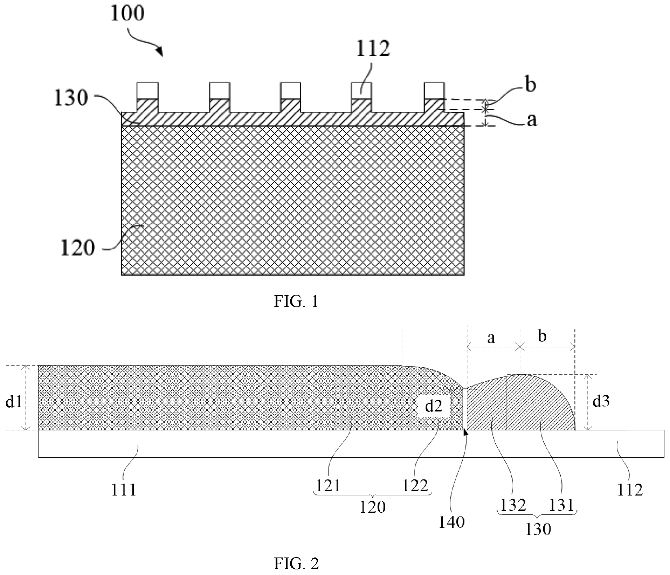

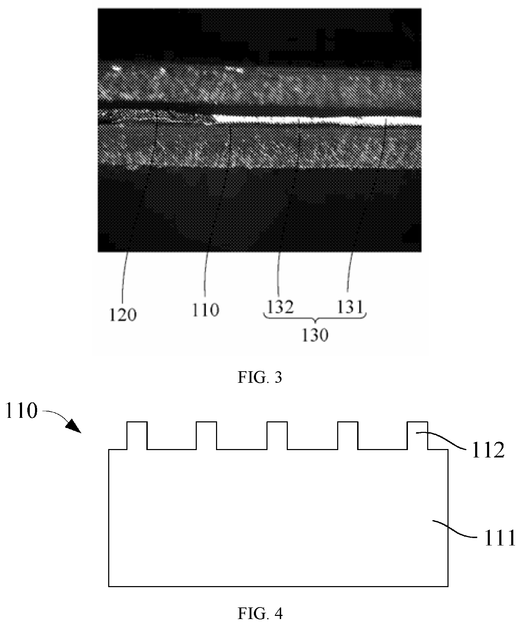

FIG. 1 is a schematic structural diagram of an electrode sheet according to an embodiment of the present application, FIG. 2 is a cross-sectional view of the electrode sheet according to an embodiment of the present application, and FIG. 3 is a physical picture in cross-sectional view of the electrode sheet according to an embodiment of the present application.

An embodiment of the present application provides an electrode sheet 100. The electrode sheet 100 may be a positive electrode sheet. The positive electrode sheet and a negative electrode sheet may be stacked to form a cell. Referring to FIGS. 1 and 2, the electrode sheet 100 may include a current collector 110, and an active layer 120 and an insulation layer 130 located on the current collector 110. An insulation layer 130 may be arranged adjacent to the active layer 120.

Referring to FIGS. 2 and 3, the active layer 120 may include a first main body region 121 and an edge region 122 connected to each other. The insulation layer may be arranged adjacent to the edge region 122 of the active layer 120, that is, the edge region 122 is located between the first main body region 121 and the insulation layer 130. The insulation layer 130 may include a second main body region 131 and a first side region 132 close to the active layer 120, that is, the first side region 132 is located between the edge region 122 and the second main body region 131. A thickness of the first side region 132 of the insulation layer 130 is less than a thickness of the second main body region 131 of the insulation layer 130.

A boundary point between the first main body region 121 and the first edge region 122 may be determined in the following way: in a direction from the edge region 122 of the active layer 120 toward the first main body region 121 of the active layer 120, taking a test point every 50 µm, the position where a thickness increase rate of two adjacent test points is less than 1% is determined as the boundary point between the first main body region 121 and the first edge region 122.

Correspondingly, a boundary point between the second main body region 131 and the first side region 132 in the insulation layer 130 may also be determined with reference to the method for determining the boundary point between the first main body region 121 and the first edge region 122.

As shown in FIG. 2, a ratio of a minimum thickness d2 of the edge region 122 to a thickness d1 of the first main body region 121 may range from 0.95 to 1.05.

In this way, the thickness difference between the first main body region 121 and the edge region 122 of the active layer 120 can be effectively reduced, making the overall thickness of the active layer 120 more uniform.

For example, the active layer 120 may be arranged on the current collector 110 by means of coating. For example, two rows of adhesive tapes may be bonded onto the current collector 110 prior to coating the current collector 110 with the active layer 120, with a gap formed between the two rows of adhesive tapes. The active layer 120 is coated between the two rows of adhesive tapes such that the gap between the two rows of adhesive tapes is filled with the active layer 120. During the coating process of the active layer 120, the active layer 120 may be coated more uniformly onto the part between the two adhesive tapes, so that a thinned region of the active layer 120, which is relatively thin, is located on the adhesive tapes.

Upon completion of coating and drying of the active layer 120, the adhesive tapes may be removed, so that only the active layer 120 between the adhesive tapes remains on the current collector 110. During the process of removing the adhesive tapes, the thin region of the active layer 120 located on the adhesive tapes may be removed from the current collector 110 together with the adhesive tapes, remaining only the first main body region 121 and the edge region 122 of the active layer 120. The small difference between the thickness of the edge region 122 and the thickness of the first main body region 121 can effectively improve the uniformity of the overall thickness of the active layer 120, so that the thickness difference between the edge part and the main body part in the middle of the electrode sheet is small and the thickness is uniform.

Compared with solutions in the related art, in the embodiments of the present application, the ratio of the minimum thickness of the edge region 122 of the active layer 120 to the thickness of the first main body region 121 ranges from 0.95 to 1.05, so that the overall thickness difference of the active layer 120 can be effectively reduced to make the thickness of the active layer 120 on the current collector 110 more uniform, which can effectively reduce the thickness difference between the main body part in the middle and the edge part of the electrode sheet to make the overall thickness of the electrode sheet more uniform. In this way, after the electrode sheet is wound or stacked, the accumulation of thickness difference can be effectively reduced, and the thickness difference between the main body part in the middle and the edge part of the cell can be effectively reduced. The content of the active layer 120 can be effectively increased, thereby effectively increasing the energy density of the cell.

Still referring to FIG. 2, the thickness of the edge region 122 gradually decreases from an end of the edge region 122 close to the first main body region 121 to an end of the edge region 122 away from the first main body region 121. That is, the minimum thickness of the edge region 122 is the thickness of the end of the edge region 122 away from the first main body region 121. Therefore, it can be understood that the ratio of the minimum thickness of the edge region 122 to the thickness of the first main body region 121 is a ratio of the thickness of the end of the edge region 122 away from the first main body region 121 to the thickness of the first main body region 121.

The end of the edge region 122 away from the first main body region 121 is a part of the entire active layer 120 with the minimum thickness, and the first main body region 121 is a part of the active layer 120 with the maximum thickness. That is, a ratio of thickness of the part of the active layer 120 with the minimum thickness to the part of the active layer 120 with the maximum thickness ranges from 0.95 to 1.05. In this way, the overall thickness difference of the active layer 120 can be effectively reduced, the uniformity of the overall thickness of the active layer 120 can be effectively improved, the uniformity of the overall thickness of the electrode sheet 100 can be effectively improved, and the content of the active layer 120 can be effectively increased, thereby effectively increasing the energy density of the cell.

A ratio of a thickness of a highest point of the second main body region 131 of the insulation layer 130 to a thickness of a highest point of the first main body region 121 of the active layer 120 ranges from 1 : 1 to 1 : 4. The thickness of the insulation layer 130 is less than the thickness of the active layer 120, and the difference between the thickness of the insulation layer 130 and the thickness of the active layer 120 is small, making the thickness of a material layer on the current collector more uniform. During hot-pressing formation of the electrode sheet, the recess at the part of the cell connected to the tab region can be reduced, making the overall stress on the cell more uniform, thereby effectively improving the adhesion at the edge part of the electrode sheet and improving the overall structural stability of the cell.

FIG. 4 is a schematic structural diagram of a current collector according to an embodiment of the present application.

Referring to FIG. 4, the current collector 110 may include an electrode sheet region 111 and a tab region 112 connected to each other. For example, the tab region 112 may be formed in the current collector 110 by means of cutting or the like. For example, after the insulation layer 130 is dispensed onto the current collector 110, the electrode sheet 100 may be cut or trimmed to form the tab region 112.

The active layer 120 may be located on the electrode sheet region 111, and the second main body region 131 of the insulation layer 130 may be located on the tab region 112. The insulation layer 130 may slide downward from the highest point in the middle toward the periphery. For example, the insulation layer 130 may be dropped onto the current collector 110 by means of dispensing. After the insulation layer 130 is dropped onto the current collector 110, the insulation layer 130 may extend toward the periphery, and the thickness of the insulation layer 130 gradually decreases as the insulation layer 130 extends outward, so that the middle part of the insulation layer 130 has the maximum thickness, the thickest part being the second main body region 131 of the insulation layer 130.

During the arrangement of the insulation layer 130 by means of dispensing, the insulation layer 130 may be dropped onto the tab region 112, so that the second main body region 131 of the insulation layer 130 is located on the tab region. This can ensure the amount of the insulation layer 130 on the tab region 112, so that the insulation layer 130 can effectively cover burrs at a cut edge part of the tab region 112, thereby effectively preventing the burrs from piercing the separator and in turn causing the problems such as short circuits of the battery, which can effectively improve the safety of the battery.

Moreover, the second main body region 131 of the insulation layer 130 is the thickest part of the insulation layer 130, and the second main body region 131 is located in the tab region 112 and is thicker, which can increase the thickness of the edge part of the electrode sheet 100. The difference between the thickness of the edge region 122 of the electrode sheet 100 and the thickness of the middle part of the electrode sheet 100 is small, which can effectively improve the uniformity of the overall thickness of the electrode sheet 100. In this way, after the electrode sheet 100 is wound or stacked, the accumulation of the thickness difference can be effectively reduced, and the thickness difference between the main body part in the middle and the edge part of the cell can be effectively reduced. During hot-pressing formation of the electrode sheet 100, the recess at the part of the cell connected to the tab region 112 can be reduced, making the overall stress on the cell more uniform, thereby effectively improving the adhesion at the edge part of the electrode sheet 100 and improving the overall structural stability of the cell.

In the embodiments of the present application, the material for forming the insulation layer 130 may be any one of boehmite, alumina or polyimide. All the above materials have good insulating properties, and can effectively improve the insulation performance of the insulation layer 130, which can effectively reduce or prevent short circuits of the battery, thereby effectively improving the safety of the battery.

Still referring to FIG. 2, a distance between a highest point of the second main body region 131 and the edge region 122 may be a, 0.2 mm ≤ a ≤ 1.5 mm. In other words, it can be understood that the distance between the position of the drop point of the insulation layer 130 and the edge region 122 of the active layer 120 is the above value.

Controlling the distance between the position of the drop point of the insulation layer 130 and the edge region 122 of the active layer 120 can achieve a reasonable connection between the insulation layer 130 and the edge of the active layer 120 during spreading of the insulation layer 130. The gap between the insulation layer 130 and the active layer 120 can be effectively reduced, and integration between the insulation layer 130 and the active layer 120 can be reduced or avoided.

This can prevent short circuits caused by contact between the negative electrode sheet and the current collector due to the excessively large gap between the insulation layer 130 and the active layer 120, and can also prevent unevenness in the thickness of the electrode sheet caused by an excessive thickness of an integrated part due to the excessive contact and integration of the insulation layer 130 and the active layer 120.

Still referring to FIG. 2, a distance between the highest point of the second main body region 131 and an end of the insulation layer 130 away from the edge region 122 may be b, 1.5 mm ≤ b ≤ 3 mm. That is, the distance between the highest point of the insulation layer 130 and the end of the insulation layer 130 away from the edge region 122 is smaller, which can reduce the proportion of the insulation layer 130 on the current collector, thereby increasing the proportion of the active layer 120 on the current collector and effectively increasing the energy density of the battery.

The value of a may be less than the value of b. After the insulation layer 130 is dropped onto the tab region 112, the distance by which the insulation layer 130 flows away from the active layer 120 is b, and the distance by which the insulation layer 130 flows toward the active layer 120 is a. By setting the value of a to be less than the value of b, after flowing by a certain distance toward the active layer 120, the insulation layer 130 is in contact with the active layer 120 and stops flowing, while the insulation layer 130 continues to flow away from the active layer 120.

The insulation layer 130 may stop flowing when blocked by the active layer 120, and as the insulation layer 130 continues to flow, the thickness of the insulation layer 130 at the end close to the active layer 120 gradually increases. This can effectively reduce the thickness difference between the insulation layer 130 and the active layer 120, thereby effectively improving the uniformity and consistency of the overall thickness of the cell.

Still referring to FIG. 2, a ratio of the distance a between the highest point of the insulation layer 130 and the edge region 122 to the length of the tab region 112 may range from 0.1 to 0.3. In this way, the coverage area of the insulation layer 130 on the tab region 112 can be increased, and when the separator of the battery shrinks at high temperature, the negative electrode sheet may be in contact with the insulation layer 130, which can prevent short circuits caused by contact between the negative electrode sheet and the tab region 112 and is conducive to improving the safety of the battery.

Still referring to FIG. 2, the thickness of the highest point of the insulation layer 130 may be d3, the thickness of the end of the edge region 122 close to the insulation layer 130 may be d2, and a ratio of the value of d3 to the value of d2 may range from 1 : 1 to 3 : 1. In this way, the thickness difference between the insulation layer 130 and the active layer 120 can be reduced, so that the flatness of the overall thickness of the cell can be effectively improved, thereby improving the adhesion at the edge of the cell and effectively improving the stability of the cell.

Still referring to FIG. 2, there is a gap 140 between the insulation layer 130 and the edge region 122, and a width of the gap 140 is less than or equal to 0.5 mm. Owing to the small size of the gap 140, it is possible to reduce or prevent short circuits inside the battery caused by contact between the negative tab region and the current collector 110, which is conducive to improving the safety of the battery.

And/or, a ratio of the width of the gap 140 to the width of the insulation layer 130 (i.e., a + b) may be less than 0.3. The size of the gap 140 may be controlled by controlling the ratio of the width of the gap 140 to the width of the insulation layer 130, so that the size of the gap 140 can be effectively reduced. This can reduce or prevent short circuits inside the battery caused by contact between the negative tab region and the current collector 110, which is conducive to improving the safety of the battery.

The gap 140 may be located in the electrode sheet region 111 or located in the tab region 112. Since the electrode sheet 100 is relatively long, the edge of the active layer 120 may be offset to some extent during the process of coating the current collector 110 with the active layer 120, so that the edge of the active layer 120 is partially located in the electrode sheet region 111 and partially located in the tab region 112, and thus the gap 140 is correspondingly located in the electrode sheet region 111 or the tab region 112.

The embodiments of the present application may further provide a cell. The cell may include a first electrode sheet, a second electrode sheet and a separator. The first electrode sheet is the electrode sheet 100 as described in any one of the above scenarios. For example, the electrode sheet 100 may be a positive electrode sheet, and the second electrode sheet may be a negative electrode sheet. Since the cell includes the electrode sheet 100 described above, the recessed part in the cell can be effectively reduced, which can effectively improve the uniformity of the overall thickness of the cell and improve the overall adhesion of the cell, thereby effectively improving the structural stability of the cell. In addition, the energy density of the cell can also be effectively increased.

The highest point of the insulation layer 130 extends beyond the edge of the second electrode sheet in the direction from the electrode sheet region 111 toward the tab region 112 of the first electrode sheet. In other words, it can be understood that the highest point of the insulation layer 130 is located outside the negative electrode sheet. In this way, while satisfying the requirement for the negative electrode sheet to cover the positive electrode sheet, the edge of the negative electrode sheet can be closer to the edge of the positive electrode sheet, which can effectively reduce the size difference between the negative electrode sheet and the positive electrode sheet and is conducive to increasing the overall energy density of the cell.

The embodiments of the present application may further provide a battery that may include the cell described above. Since the battery includes the cell described above that has good flatness and structural stability, the overall flatness and structural stability of the battery can be effectively improved, which is conducive to prolonging the service life of the battery. In addition, the battery may also have high energy density, which can extend the battery life.

In the description of the embodiments of the present application, it should be understood that orientation or position relationships indicated by the terms such as "center", "longitudinal", "transverse", "length", "width", "thickness", "upper", "lower", "front", "rear", "left", "right", "vertical", "horizontal", "top", "bottom", "inner", "outer" are based on orientation or position relationships shown in the accompanying drawings and are merely for ease of description of the present application and simplification of the description, rather than indicating or implying that the apparatuses or elements referred to must have a specific orientation or be constructed and operated in a specific orientation, and therefore cannot be construed as limiting the present application.

In the descriptions of the present application, it can be understood that the terms "include", "have" and any variation thereof used herein are intended to cover a non-exclusive inclusion, for example, a process, method, system, product, or device that includes a series of steps or units is not necessarily limited to those steps or units that are explicitly listed, but may include other steps or units not explicitly listed or inherent to such a process, method, product or device.

Unless expressly stated or limited otherwise, the terms such as "mounting", "connecting", "connection" and "fixing" should be interpreted broadly, for example, either fixed or detachable connection, or integration; may be a direct connection or an indirect connection by means of an intermediate medium, or may be internal connection between two elements or interaction between the two elements. For those of ordinary skill in the art, the specific meaning of the terms mentioned above in the present application should be construed according to specific circumstances. In addition, the terms "first", "second", etc. are merely for the purpose of description, and shall not be understood as any indication or implication of relative importance or any implicit indication of the number of technical features indicated.

It should be finally noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and these modifications or substitutions do not make the essence of the corresponding technical solution depart from the scope of the technical solutions of the embodiments of the present application.

## Claims

1. An electrode sheet, **characterized by** comprising a current collector, and an active layer and an insulation layer located on the current collector, wherein
the active layer comprises a first main body region and an edge region connected to each other, the insulation layer is arranged adjacent to the edge region of the active layer, and the insulation layer comprises a second main body region and a first side region close to the active layer, a thickness of the first side region of the insulation layer being less than a thickness of the second main body region of the insulation layer; and
a ratio of a minimum thickness of the edge region to a thickness of the first main body region ranges from 0.95 to 1.05.

2. The electrode sheet according to claim 1, **characterized in that** a thickness of the edge region gradually decreases from an end of the edge region close to the first main body region to an end of the edge region away from the first main body region.

3. The electrode sheet according to claim 1 or 2, **characterized in that** a ratio of a thickness of a highest point of the second main body region to a thickness of a highest point of the first main body region ranges from 1 : 1 to 1 : 4.

4. The electrode sheet according to any one of claims 1 to 3, **characterized in that** the current collector comprises an electrode sheet region and a tab region connected to each other; and
the active layer is located on the electrode sheet region, and the second main body region of the insulation layer is located on the tab region.

5. The electrode sheet according to claim 4, **characterized in that** a gap is formed between at least part of the insulation layer and the edge region, and a ratio of a width of the gap to a width of the insulation layer is less than 0.3.

6. The electrode sheet according to claim 5, **characterized in that** the width of the gap is less than or equal to 0.5 mm.

7. The electrode sheet according to claim 5 or 6, **characterized in that** the gap is located in the electrode sheet region or located in the tab region.

8. The electrode sheet according to any one of claims 4 to 7, **characterized in that** a ratio of a distance a between a highest point of the second main body region and the edge region to a length of the tab region ranges from 0.1 to 0.3.

9. The electrode sheet according to any one of claims 1 to 8, **characterized in that** the distance between the highest point of the second main body region and the edge region is a, and a distance between the highest point of the second main body region and an end of the insulation layer away from the edge region is b, a value of a being less than or equal to a value of b.

10. The electrode sheet according to claim 9, **characterized in that** 0.2 mm ≤ a ≤ 1.5 mm.

11. The electrode sheet according to claim 9 or 10, **characterized in that** 1.5 mm ≤ b ≤ 3 mm.

12. The electrode sheet according to claim 1 or 2, **characterized in that** a ratio of a thickness of the highest point of the second main body region to a thickness of an end of the edge region close to the insulation layer ranges from 1 : 1 to 3 : 1.

13. The electrode sheet according to claim 1 or 2, **characterized in that** the current collector comprises an electrode sheet region and a tab region connected to each other; and
the active layer is located on the electrode sheet region, and the second main body region of the insulation layer is located on the tab region.

14. The electrode sheet according to claim 13, **characterized in that** a gap is formed between at least part of the insulation layer and the edge region, and a ratio of a width of the gap to a width of the insulation layer is less than 0.3.

15. The electrode sheet according to claim 14, **characterized in that** the width of the gap is less than or equal to 0.5 mm.

16. The electrode sheet according to claim 14 or 15, **characterized in that** the gap is located in the electrode sheet region or located in the tab region.

17. The electrode sheet according to any one of claims 13 to 16, **characterized in that** a ratio of a distance a between a highest point of the second main body region and the edge region to a length of the tab region ranges from 0.1 to 0.3.

18. The electrode sheet according to any one of claims 13 to 17, **characterized in that** the distance between the highest point of the second main body region and the edge region is a, and a distance between the highest point of the second main body region and an end of the insulation layer away from the edge region is b, a value of a being less than or equal to a value of b.

19. The electrode sheet according to claim 18, **characterized in that** 0.2 mm ≤ a ≤ 1.5 mm.

20. The electrode sheet according to claim 18 or 19, **characterized in that** 1.5 mm ≤ b ≤ 3 mm.

21. The electrode sheet according to any one of claims 13 to 20, **characterized in that** a ratio of a thickness of the highest point of the second main body region to a thickness of an end of the edge region close to the insulation layer ranges from 1 : 1 to 3 : 1.

22. A cell, **characterized by** comprising a first electrode sheet, a second electrode sheet and a separator, wherein the first electrode sheet is an electrode sheet according to any one of claims 1 to 21.

23. The cell according to claim 22, **characterized in that** a highest point of an insulation layer of the first electrode sheet extends beyond an edge of the second electrode sheet in a direction from an electrode sheet region toward a tab region of the first electrode sheet.

24. A battery, **characterized by** comprising a cell according to claim 22 or 23.
